# EUROPÄISCHE PATENTSCHRIFT

(11) **EP 1 663 669 B1**
(45) Veröffentlichungstag und Bekanntmachung des Hinweises auf die Patenterteilung: **23.07.2014**
(21) Anmeldenummer: 04761028.2
(22) Anmeldetag: 08.09.2004
(51) Int. Cl.: B44C 5/04, B32B 29/00, B32B 27/20, D21H 27/28

(54) **DEKORLAMINAT UND VERFAHREN ZU DESSEN HERSTELLUNG**
DECORATIVE LAMINATE AND METHOD FOR PRODUCING THE SAME
STRATIFIE DECORATIF ET SON PROCEDE DE PRODUCTION

(30) Priorität: 08.09.2003 AT 14072003
(43) Veröffentlichungstag der Anmeldung: 07.06.2006
(73) Patentinhaber: Kaindl Decor GmbH, 5071 Wals (AT)
(72) Erfinder: SCHITTER, Leonhard, A-5300 Hallwang (AT); GRUBER, Alois, A-5111 Bürmoos (AT)
(74) Vertreter: Wildhack & Jellinek
(86) Internationale Anmeldenummer: PCT/AT2004/000306
(87) Internationale Veröffentlichungsnummer: WO 2005/023561

(56) Entgegenhaltungen:
- EP-A- 0 875 399
- US-A- 4 499 137
- US-A- 4 567 087
- US-A- 5 807 608

## Beschreibung

Die vorliegende Erfindung betrifft ein Dekorlaminat mit abriebfester Oberflächen-Beschichtung für damit beschichtete bzw. zu beschichtende Laminatkörper, insbesondere Laminat-Fußbodenplatten bzw. -paneele auf Basis von Holzwerkstoffen, gemäß dem **Oberbegriff des Anspruches 1.**

Weiters betrifft die vorliegende Erfindung die Herstellung des neuen, eine abrasions-resistente Oberflächen-Beschichtung aufweisenden Dekor-Laminates, welches für Fußboden-Platten, -Paneele u.dgl. vorgesehen ist.

Die weltweite Verbreitung von Laminatböden nach EN 13329 erklärt sich unter anderem aus der besonders guten Reinigungsfähigkeit dieser Bodenbeläge. Diese wiederum ist eine Folge der Porenfreiheit der Oberfläche bzw. Außenfläche von deren Oberflächen-Beschichtung, die im Allgemeinen mit dem Fachausdruck "geschlossen" bezeichnet wird.

Tatsächlich "geschlossene" Oberflächen wurden bisher durch den Einsatz von sogenannten "klassischen" Overlays ermöglicht. Derartige klassische Overlays bestehen aus dünnen, besonders transparenten Spezialpapieren, die mit duroplastischen Harzen, wie insbesondere Melaminharzen, getränkt werden. Diese Papiere werden auf bzw. über dem Oberflächen- und Verschleißfilm der Dekorbahn angeordnet und mit demselben mit der Dekorbahn und letztendlich mit dem Substrat auf Basis eines holzbasierten Werkstoffes zum für die Verlegung von Fußböden vorgesehenen Laminat verpresst und sind für die problemlose Reinigungsfähigkeit der Laminatböden von entscheidender Bedeutung. Durch den Einsatz der klassischen Overlay-Filme, insbesondere in Form von Overlay-Papierbahnen, wird jedoch unvermeidlich die Brillanz der Oberfläche bzw. Oberflächen-Schicht des Dekorfilms vermindert, weil es infolge des Vorhandenseins der Fasern im Overlay-Film zu einer nicht zu vermeidenden und durchaus deutlich wahrnehmbaren Verschwommenheit von Linien, Mustern, Designs usw. sowie zu einer gewissen Dämpfung und Eintrübung des farblichen und grafischen Eindruckes des Oberflächen-Dekors kommt.

Wird jedoch das klassische, meist in Form eines, mit dem Beschichtungsharz getränkten Overlay-Papiers vorliegende Overlay weggelassen, was seit etlicher Zeit immer wieder versucht wurde und worauf im Folgenden noch näher eingegangen werden wird, kommt es zu einer "Offenporigkeit" der Oberflächen-Schicht, welche letztlich zu irreversiblen und in jedem Fall die Optik wesentlich beeinträchtigenden Verschmutzungen der Laminat-Oberfläche führt, was insbesondere bei Laminat-Fußböden stört und bisher nicht zu vermeiden war.

Eine weitere, völlig unakzeptable Folge des Weglassens des Overlays besteht in der Gefahr, dass es bei der Produktion der Laminate für die verschiedensten Zwecke, und insbesondere für Fußböden, zur Beschädigung oder Zerstörung der Oberflächen der im sogenannten Kurztakt-Verfahren eingesetzten Pressbleche bzw. der in der kontinuierlichen Laminat-Produktion eingesetzten Pressbänder kommt. Aus diesem Grund war es bisher in der täglichen Betriebspraxis mit den heute üblichen hohen Produktionsgeschwindigkeiten tatsächlich nicht möglich, eine über möglichst lange Zeiträume ungestörte Produktion von hoch-abriebfesten Laminaten ohne die Verwendung klassischer Overlays durchzuführen, welche sich in der Praxis an sich durchaus bewährt haben. Insbesondere ist es trotz verschiedener Ansätze zur Lösung dieses schwerwiegenden, bei den overlayfilm-losen abrasions-resistenten Laminat-Oberflächen auftretenden Problems bis jetzt nicht gelungen, die oberflächenverchromten, hochempfindlichen Pressbleche bzw. Endlos-Pressbänder der Produktionsstraßen in vollem Ausmaß vor den wie oben erwähnten mechanischen Beschädigungen bzw. eventuell sogar vor einer Zerstörung durch aus der Oberflächen-Schicht der abrasions-resistent ausgerüsteten Dekorlaminate herausragende Abrasivstoff-Partikel zu bewahren.

Die Tatsache, dass zahlreiche Versuche unternommen worden sind, OberflächenSchichten von Laminaten für deren Benutzung und Gebrauch nachhaltig abriebfest herzustellen, ist an sich nicht erheblich, denn die nach EN 13329 geforderten Abriebfestigkeits-Werte lassen sich in vergleichbarem Ausmaß durchaus mit Dekorfilmen ohne Overlay-Papier erreichen, wenn sie nur mit - die geforderte Abriebfestigkeit gewährleistenden - Abrasivstoff-Partikeln ausgerüstet worden sind. Aus diesem Grund ist also der Einsatz klassischer Overlays bei der Herstellung von Laminaten für Böden zur Erreichung der Abriebfestigkeits-Werte, welche die EN 13329 fordert, nicht nötig. Die klassischen Overlays sind aber, wie oben ausgeführt, für den Schutz der Pressbleche oder Endlos-Pressbänder vor der schädlichen Einwirkung der in der Oberflächen-Schicht des zu produzierenden Dekor-Laminates enthaltenden Abrasivstoff-Partikel - in der überwiegenden Zahl sind es Korundpartikel - von ganz entscheidender Bedeutung.

Praktisch alle bisherigen Versuche, höher abriebfest ausgerüstete Dekorfilme mittels Endlos-Pressbändern oder Pressblechen ohne den Einsatz klassischer Overlays zu produzieren, sind bisher an den - durch das in der Oberflächenschicht vorhandene, die Abriebfestigkeit erhöhende Abrasivstoffmedium verursachten - OberflächenBeschädigungen oder gar -Zerstörungen der Verchromung der genannten Bänder bzw. Bleche und/oder der ihnen aufgeprägten Press-Strukturen gescheitert.

Ein weiteres, bisher ebenfalls nicht gelöstes, Problem von overlaypapier-losen Oberflächen-Beschichtungen besteht darin, dass die Fasern der Overlay-Papiere eine spätere Rissbildung in der aushärtenden Hartschicht der Harz-, insbesondere MelaminFormaldehyd-Vorkondensate zuverlässig verhindern, dass aber praktisch alle Versuche, die klassischen Overlays zu umgehen, hinsichtlich der angestrebten Rissbildungsfreiheit bisher zu keiner tatsächlich befriedigenden und dauerhaften Lösung geführt haben.

Ein technologisch eventuell gangbarer Weg, die wegen der Schonung der Pressbleche bzw. -bänder vorgesehenen Overlay-Schutzfolien bzw. -filme bei der Herstellung von Laminaten, z.B. für Fußböden, einzusparen, bestünde im Einsatz von sogenannten Strukturgeberpapieren, wie z.B. in der DE 101 24 710 A1 geoffenbart. Diese würden an die Stelle der entsprechend strukturierten Oberflächen der Pressbleche bzw. Endlosbänder bei der Laminatboden-Produktion treten und an deren Stelle dem Laminat die jeweils gewünschte Oberflächenstruktur vermitteln, und das verchromte Endlosband selbst schützen.

Wie jedoch die Praxis gezeigt hat, ist der Einsatz von Strukturgeberpapieren mit einem erheblichen Qualitätsabfall der unter Einsatz derselben erhaltenen Laminate verbunden, was nicht nur die Strukturierung selbst betrifft. Auf Grund der durch die Papier-Zwischenlage bedingten Hemmung des Wärmeüberganges vom Pressblech bzw. von Endlosband der Durchlaufpresse her wird die Produktionsgeschwindigkeit erheblich vermindert oder aber es ist bei gleichbleibender Vorschubgeschwindigkeit die Qualität der Laminat-Oberfläche erheblich verschlechtert.

Das Problem der Rissbildung bleibt durch den Einsatz von Strukturgeberpapieren selbstverständlich weiterhin ungelöst.

Es ist nun an sich eine große Zahl von Verfahren zur Herstellung von mit einer mit Abrasivstoff-Partikeln beaufschlagten Oberflächen-Beschichtung ohne Overlay-Papier, -Film oder -Folie ausgestatteten Laminaten bekannt geworden, welche sich sowohl bezüglich Zusammensetzung der Harzmasse und der Verfahrens-Details bei deren Herstellung in vielen Fällen nur durch relativ geringfügige Abweichungen bzw. Details voneinander unterscheiden.

Im wesentlichen besteht der Laminat-Grund-Herstellungsvorgang darin, dass eine mit einem beliebigen Druckdekor versehene Faserstoff-, insbesondere Papierbahn mit einem hitzehärtbaren Harz, bevorzugterweise mit einem gegebenenfalls modifizierten Melamin-, Formaldehyd- und/oder Harnstoffharz, imprägniert wird und gegebenenfalls unmittelbar danach oder aber später - gegebenenfalls unter Zwischenschaltung einer gegebenenfalls mehrlagigen, ebenfalls mit einem thermohärtbaren Harz imprägnierten Papierbahn - als Dekor-Laminatbahn mit verschleiß-resistenter Oberflächen-Schicht unter Einwirkung von Hitze und Druck an ein Substrat, wie insbesondere an eine Holzspan- oder -faserplatte, gebunden wird. Heute überwiegt die Technik, das Harz der Dekor-Laminatbahn, und der gegebenenfalls vorhandenen Kernlagenbahn(en), jeweils nur einer Teilhärtung zu unterwerfen und das so vorgehärtete Laminat unter Einwirkung von Hitze und Druck mittels des dann fertig aushärtenden Harzes letztendlich an das jeweils vorgesehene Holzwerkstoff-Substrat zu binden.

Was den Stand der Technik auf dem Gebiet der Herstellung von Dekorlaminaten mit abriebfester Oberflächen-Beschichtung ohne Overlay-Film betrifft, ist dafür eine große Zahl von Vorschlägen gemacht und teilweise auch realisiert worden, auf welche im Folgenden keineswegs auch nur annähernd vollständig kurz eingegangen werden soll:

So ist z.B. aus der DE 28 58 182 C2 eine Dekorbahn zur Herstellung von Dekorplatten mit hoher Abriebwiderstandsfähigkeit bekannt, bei der eine über dem Dekor angeordnete, dünne verschleißfeste Beschichtung vorgesehen ist, die ein abrieb-resistentes Mineral und weiters ein Bindemittel für dasselbe enthält, wobei das Bindemittel mit der eingesetzten Harzmasse verträglich und für diese Harze durchlässig sein soll.

Die Herstellung eines Dekorlaminats kann, wie z.B. auch aus der DE 2 800 762 hervorgeht, in der Weise erfolgen, dass zuerst die nichtimprägnierte Dekorbahn mit einer wässrigen, mit mikrokristalliner Cellulose stabilisierten Suspension von Aluminiumoxid-Teilchen beaufschlagt wird, wonach eine Trocknung erfolgt. Danach wird die Imprägnierung mit einer Melamin-Formaldehydharz-Lösung vorgenommen und schließlich wird diese Verschleiß-Dekorbahn mit einer Kernbahn und der Substratplatte heiß-verpresst. Bei einer derartigen Dekorbahn sind die abrasions-resistenten feinen Mineralteilchen jedoch von der mikrokristallinen Cellulose zu der Außen- bzw. Oberfläche, der Oberflächen-Harzschicht hin verdrängt und ragen dann zum Teil aus derselben heraus und verursachen dadurch eine nichterwünschte Rauhigkeit dieser Oberfläche und - was viel schwerer wiegt, einen erhöhten Verschleiß der bei der Herstellung der Laminate eingesetzten Bleche der Presswerkzeuge infolge nicht zu vermeidender Beschädigungen der Blech-Oberfläche. Darüber hinaus ist es gemäß dieser Schrift erforderlich, die abrieb-resistente Final-Beschichtung in einem separaten Arbeitsgang aufzubringen, was in jedem Fall die Produktionskosten erhöht.

Die DE 195 08 797 C1 sieht bei einem Verfahren zur Herstellung eines Dekorlaminatpapiers vor, dass ein Gemisch aus Melaminharz, α-Cellulose, Korund als Hartstoff, Additiven und Hilfsstoffen sowie Wasser hergestellt wird und auf die Sichtseite eines schon in einem vorhergegangenen Verfahrensschritt mit Harz getränkten, jedoch bis auf eine Restfeuchte von einigen Prozenten getrockneten Dekorpapierbogens aufgebracht wird, wonach die Trocknung erfolgt. Diese Art des Vorgehens soll den Vorteil bringen, dass die Korundteilchen auch an ihren aus der angestrebten Verschleißschicht eventuell noch "herausragenden" Extrem-Spitzen und -Kanten mit einem kontinuierlichen Harzfilm bedeckt sein sollen, was sich in der Praxis jedoch nicht voll realisieren lässt. Die dort angestrebte Ummantelung der Hartstoff-Teilchen an ihren Extremstellen konnte jedoch in der Praxis nicht erreicht werden, womit eine Beschädigung der Pressbleche bzw. -platten beim Heiß-Verpressen der Dekorlaminate nie gänzlich zu verhindern war.

Der US 3 135 643 A ist eine Laminat-Herstellungsmethode zu entnehmen, gemäß welcher die Dekorbahn zuerst mit einer Harzsuspension getränkt wird und diese noch feucht mit einer Melaminharz, Quarz, Cellulose, Cellulosederivate und Wasser umfassenden Dispersion überschichtet wird. Die für eine Schonung der Pressen-Platten bzw. -Bänder unverzichtbare Voll-Ummantelung der Abrasivstoff-Partikel mit Harz lässt sich, wie sich zeigte, auch mit dieser Methode nicht sicherstellen.

Aus der EP 472 036 A1 ist ein zweistufiges "Nass-in-Nass"-Verfahren für die Herstellung abrasions-resistenter Dekorlaminate bekannt geworden, gemäß welchem vorgesehen ist, dass die Dekorbahn selbst in jedem Fall schon im Rahmen der ersten Tränkung mit Harz bis zu einem jeweils gewünschten Prozentsatz mit einer Abrasivstoff-Teilchen enthaltenden Melaminharz-Dispersion imprägniert wird. Nachteil dieser Art der Einbringung der Abrasivstoff-Teilchen direkt auf und in die Papierbahn der Dekorschicht ist, dass innerhalb der Dekor-Deckschicht die Verteilung der Teilchen nicht homogen ist, sodass es bei diesem ersten Herstellungsschritt zu lokalen Versteifungen kommt. In einem zweiten Schritt erfolgt dann eine Beaufschlagung mit einer ebenfalls die Abrasivstoffe enthaltenden Harzdispersion. Die erwähnten Zonen von Versteifungen der Dekorbahn infolge des Eindringens der Abrasivstoffteilchen in dieselbe stören dann jedenfalls die Flexibilität der Dekorbahn beim tatsächlichen Beschichtungsvorgang.

Zu erwähnen ist weiters die EP 732 449 A1, gemäß welcher abriebfeste Laminate dadurch erhalten werden, dass ein zu beschichtender Dekorpapier-Bogen bzw. eine derartige Bahn zuerst mit dem Harz imprägniert wird, wonach eine Trocknung auf bestimmte Restfeuchtewerte erfolgt, wonach dann erst auf die derart teil-getrocknete Imprägnierschicht eine die Abrasivstoffteilchen, Cellulose, Harz und Additive enthaltende Harzmasse aufgebracht wird. Nachteil dieser Beschichtungsmethode ist, dass eine echte, mechanisch hoch beanspruchbare Aneinanderbindung des Imprägnier-Harzkörpers mit dem die Abrasivstoff-Teilchen enthaltenden Oberflächen-Beschichtungs-Harzkörper nicht erzielt wird.

Den in den beiden Patentschriften US 4,713,138 A und US 4,971,855 A beschriebenen Verfahren zur Herstellung von Laminaten mit abriebfesten Oberflächen-Beschichtungen haften ebenfalls die bei allen bisher bekannten Einschritt-Imprägnier-Beschichtungen mit Abrasivstoff-Teilchen nicht zu vermeidenden Nachteile an. Gemäß der dort beschriebenen Technologie wird auf das zu imprägnierende Papier ohne Vorbehandlung ein die Abrasivstoff-Teilchen, Cellulose und das jeweilige Harz enthaltendes Gemisch aufgebracht. Infolge der Saug- und Absorptionswirkung des "ungetränkt" vorliegenden Dekor-Papiers kommt es dort infolge von dessen Faser-Inhomogenitäten zu ungleichmäßigen Sauggeschwindigkeiten an verschiedenen Stellen der PapierOberfläche, wodurch dort, wo eine raschere Absaugung erfolgt, mehr Abrasivstoffteilchen angesaugt und gebunden werden, und es dort zu Zonen höherer Flächenbelegung mit diesen Teilchen kommt als in anderen Bereichen der Oberflächen und somit zu den schon oben erwähnten zonalen Versteifungen. Durch die beschriebene Sogwirkung wird auch eine sonst eintretende, geordnete gegenseitige Ausrichtung der Teilchen gestört, sodass sich in Zonen erhöhter Saugwirkung etwa Nester der Teilchen ausbilden, welche die Homogenität der Eigenschaften der abriebfesten Oberfläche der Laminate empfindlich stören.

Zur obengenannten US 4,713,138 ist weiters auszuführen, dass dort die mikrokristalline Cellulose den Zweck hat, eine gleichmäßige Verteilung der Abrasivstoff-Teilchen in in der Oberflächen-Harzschicht zu bewirken, was jedoch dazu führt, dass Ecken oder Kanten der Teilchen, welche sich nahe der Außen-Fläche der Oberflächenschicht befinden, über dieselbe hinausragen und somit die Oberfläche der Pressbleche beschädigen können. Aus dieser US-A geht auch der Einsatz von Polyethylen-Wachs als oberflächenaktive und gleitfähigkeitserhöhende Komponente hervor.

Ein Zusatz von bestimmten Polyethylen-Wachsen als Gleitmittel in Harzkompositionen für die Herstellung von Laminaten geht auch aus der US 4,741,946 A hervor, allerdings liegen die Abriebwerte gemäß EN 438 der nach dieser US-A hergestellten Liminate im Bereich von 150 Umdrehungen und erreichen keinesfalls jene Werte, welche hochwertige Fußböden-Laminate erreichen müssen, die etwa bei zumindest 10.000 Umdrehungen liegen sollen.

Die US 4,499,137 A und US 4,567,087 A offenbaren ein Laminat, in welchem in der Nähe von dessen Oberfläche bzw. überhaupt an dessen Oberfläche feindisperses Polyethylen-Wachs eingebaut ist. Es wird dort gezielt angestrebt, dass das Wachs beim Heißpressen "ausblüht", also an die Oberfläche wandert. Dies wird dort dadurch erreicht, dass das Polyethylen-Wachs in einem eigenen Arbeitsschritt aufgebracht wird und nicht als in die Imprägnier- und Beschichtungs-Harzmasse integrierte Komponente.

Der Einsatz von Polyethylen-Wachsen in Laminaten, und zwar in solchen mit Overlay-Papier, geht weiters aus der US 4,139,671 A hervor, wobei dort allerdings keine Abrasivstoff-Teilchen in der Oberflächen-Schicht vorgesehen sind, und außerdem in Hinblick auf den dortigen Einsatz der Laminate für Kegelbahnen eine hohe Gleitwirkung erwünscht ist, also genau das Gegenteil jener Eigenschaften, welche ein Fußboden-Laminat aufweisen muss.

Nicht zuletzt ist ein von der Anmelderin selbst entwickeltes Verfahren zur Herstellung von hochabriebfesten Dekorlaminaten gemäß EP 875 399 B1 zu erwähnen, dessen wesentliches Merkmal darin besteht, dass auf eine vorher harzimprägnierte Dekorbahn eine Abrasivstoff-Partikel enthaltende Schicht aus einer Mischung bzw. Dispersion eines hitzehärtbaren Harzes aufgebracht wird, deren für die Eigenschaften des Dekorlaminats entscheidende Komponente durch den Einsatz zumindest eines Naturstoffes gebildet ist, welcher Polysaccharide enthält. In der Praxis hat sich gezeigt, dass durch den Einsatz dieser Naturstoffe in der Harzmasse an sich schon gewisse Verbesserungen gegenüber dem Stand der Technik, insbesondere im Hinblick auf die besonders angestrebte Schonung der Pressbleche und Pressbänder, erreichbar ist, dass sich jedoch sporadisch auftretende Beschädigungen der Pressband- bzw. Pressblech-Oberflächen auch durch die gemäß dieser EP-B1 vorgesehenen Zusätze nicht voll aus der Welt schaffen ließen.

Aus der US 5807608 A ist schließlich der Einsatz von Wachsen einschließlich Polyethylen-Wachsen in overlay-freien Dekorlaminaten zur Schonung der Walzen bekannt. Es wird auch mehrfach der Einsatz von Polyvinylpyrrolidon als Bindemittel der Deckschicht vorgeschlagen, wobei jedoch auf besondere Effekte in Verbindung mit dem Problem des Walzenabriebs nicht eingegangen ist.
Trotz der Vielzahl an bekannten Vorschlägen für die störungsfreie Herstellung von Laminaten mit abrasionsfest ausgerüsteter Oberfläche blieb weiterhin die Herausforderung bestehen, ein Verfahren zur Herstellung von Dekorlaminaten mit abriebfester Oberflächenausstattung zu entwickeln, welche eine hochqualitative, von aus der Oberflächenschicht ohne schützenden Harzüberzug herausragenden Abrasivstöff-Partikeln tatsächlich freie Oberflächen-Beschichtung aufweisen, sodass die oben genannten unangenehmen, die Produktion störenden und gegebenenfalls sogar zu Produktionsausfällen führenden und auf diese Weise hohe Kosten verursachenden Beschädigungen der Pressbleche bzw. Pressbänder durch "herausragende" Abrasivstoffpartikel praktisch völlig ausgeschaltet sind.

Die Erfindung hat sich angesichts der bisher in keinem Fall in befriedigendem Ausmaß überwundenen Schwierigkeiten bei der Produktion von overlay-freien Laminaten die Aufgabe gestellt, ein Dekorlaminat bzw. mit demselben beschichtete Substratkörper für die verschiedensten Anwendungsgebiete, speziell jedoch für Fußbodenplatten, -paneele u.dgl., zu schaffen, welches sicht- und benutzungs-seitig eine in ihren Verschleißeigenschaften bis zu höchsten Abriebwerten regelbare und in ihrer Klarheit und Dekor-Wiedergabequalität hohen bzw. höchsten Anforderungen entsprechende Oberflächen-Beschichtung aufweist. Dennoch soll sowohl von der Seite der einzusetzenden Produkte als auch vom Produktionsablauf her, insbesondere was die möglichst vollständige Schonung der Pressbleche bzw. -bänder betrifft, der Herstellungsvorgang störungssicher und kostengünstig sein und sich im Rahmen bisher in der Praxis bewährter Produktionsmethoden bewegen und auf jeweils bestehenden Anlagen ohne tiefgreifende Umstellungen und Abänderungen bei praktisch gleichbleibenden Produktionsgeschwindigkeiten realisieren lassen.

Im Zuge eingehender Versuche wurde gefunden, dass eine gezielte Einarbeitung ganz bestimmter Substanzgemische in die Harzmatrix, welche letztlich nach Aushärtung die die Oberflächen-Verschleißfestigkeit der Laminate gewährleistenden Hartstoffpartikel enthalten soll, zu unerwartet qualitätsvollen, optisch anspruchsvollen, besonders hohe Gebrauchsqualität und auf einen jeweils gewünschten Einsatz abgestimmte Verschleißeigenschaften bei gleichzeitig optimaler Einbindung der Abrasivstoff-Partikel aufweisenden Laminaten führt. Hierbei treten nicht nur keine eventuellen Beeinträchtigungen des Produktionsvorgangs durch etwa zu erwartende Probleme bezüglich Thermostabilität der Haft- und Klebeeigenschaften bei längerer Hitzeinwirkung, sowie bezüglich der Form- bzw. Pressen-Trenneigenschaften und insbesondere auch nicht hinsichtlich der unbedingt zu vermeidenden Beschädigungen der Pressbleche bzw. - bänder durch die Abrasivstoff-Partikel auf. Vielmehr ist eine kompakte und aufwands-minimierte Produktionsweise ermöglicht, welche zu Dekorlaminat-Produkten mit dauerhaft rißbildungs-resistenten, hochabriebfesten Oberflächen-Beschichtungen, sogenannten "Flüssig-Overlay"-Beschichtungen, führt.

Gegenstand der vorliegenden Erfindung ist somit ein Dekorlaminat mit abriebfester Oberflächen-Beschichtung für damit beschichtete bzw. zu beschichtende Laminatkörper, insbesondere Laminat-Fußbodenplatten bzw. -paneele auf Basis von Holzwerkstoffen, der eingangs genannten Art gemäß dem Oberbegriff des Anspruches 1.

Die wesentlichen Merkmale des neuen Laminat-Werkstoffes sind im kennzeichnenden Teil des Anspruches 1 zusammengefasst. Erfindungswesentlich ist das gleichzeitige Vorhandensein des im Anspruch 1 genannten Wachs-Blends und von vernetztem (crosslinked) Polyvinylpyrrolidon in der Imprägnier- und Beschichtungs-Harzmasse, welche zu den unerwarteten neuen Laminat-Eigenschaften führt. Sie sind Folge der bisher nicht gezielt erreichbaren Anordnung der in der Oberflächen- bzw. Verschleiß-Harzschicht verteilten abrasions-resistenten Hartstoffteilchen in der Weise, dass dieselben in der an sich sehr dünnen Oberflächen-Schicht zur eigentlichen Dekorbahn-Oberfläche hin absinken, sich dort und im unmittelbaren Nahbereich derselben ansammeln und konzentrieren. Es kann vorläufig nur folgende vereinfachte Erklärung für dieses unerwartete Phänomen geltend gemacht werden: Die in relativ hohen Konzentrationen in der Imprägnier-Auftragsmasse vorhandenen Abrasivstoff-Teilchen entwickeln infolge der Wirkung des Compounds von Wachsblend und vernetztem (crosslinked) Polyvinylpyrrolidon in dieser Masse im Wesentlichen keinen Auftrieb mehr, sie schwimmen also nicht auf, und so ist dafür gesorgt, dass sie in Folge dessen nicht mehr aus der Oberflächen- bzw. Verschleiß-Schicht, also nicht mehr über die Grenze zwischen Oberflächen-Harzschicht und Luftraum hinausragen, wobei, wie das bisher der Fall war, selbst dann, wenn die herausragenden Bereiche, Spitzen od. dgl. mit einem dünnen Film dieser gehärteten Harzmasse bedeckt waren. Bisher war dennoch praktisch kein Schutz vor einer Verdrängung dieses dünnen Films im Produktionsprozess gegeben und bei Benutzung der Platten trat ein rascher Abrieb dieses Films ein, so dass es zur Bloßlegung von oft nur im Mikrometer- bzw. Submikronbereich herausragenden Spitzen, Kanten, Ecken od.dgl. der Abrasivstoff-Teilchen kommt, was trotz dieser an sich geringen Dimensionen unkontrollierte und nur mit relativ hohem Aufwand zu beseitigende Schäden an den Pressblech- bzw. Pressband-Oberflächen und nicht reinigungsfähige Oberflächen verursacht.

Was weiter in überraschender Weise eintritt, ist das Faktum, dass trotz Ein-Schritt-Auftrag und -Imprägnierung die oben im Rahmen der Erörterung des Standes der Technik beschriebene störende Bildung von lokalen bzw. zonalen "Nestern" oder "Büscheln" von Abrasivstoffen als Folge von topografisch unterschiedlichen Saugeigenschaften der Dekorbahn, welche letztlich zu störenden lokalen Versteifungen derselben führen können, nicht mehr zu beobachten ist, was ebenfalls im entscheidenen Ausmaß auf den in die Harzmasse integrierten bzw. eingearbeiteten neuartigen Wachsblend-PVP (crosslinked)-Compound zurückzuführen sein dürfte.

An dieser Stelle sei der Vollständigkeit halber ausgeführt, dass der Einsatz von Polyvinylpyrrolidon(en) (PVP) in Harzen für Laminate für begehbare Flächen, also für abriebfeste Bodenplatten od. dgl. bisher nicht bekannt war. Erwähnt ist in der US 5,496,387 A ein solcher Einsatz von PVP nur für Harze als Bindemittel für die Abrasivstoff-Partikel in Schleifmaterialien, wobei gemäß dieser Schrift die Sedimentationsgeschwindigkeit der Partikel reduziert werden soll, also ein Absinken derselben zu einem Substrat hin verhindert wird.

Was das Wachsblend im Compound betrifft, kann das Verhältnis von - neben anderen Komponenten und/oder Modifikatoren und/oder Additiven od. dgl. vorhandenen - Polyethylen und/oder Polypropylen zu Polyamid in weiten Grenzen zwischen 0,1 zu 100 und 100 zu 0,1 schwanken. Vorteilhaft ist ein Verhältnis im Bereich zwischen 50 zu 100 und 100 zu 50.

Im Rahmen der Erfindung besonders bevorzugt ist ein Laminat, dessen teil-gehärtete Harz-Imprägnier- und -Auftragsmasse mit einem speziellen Wachsblend im Compound gemäß Anspruch 2 gebildet ist.

Es hat sich gezeigt, dass das Compound bzw. insbesondere das Wachsblend im Compound in der Harzmasse bei den erfindungsgemäßen Laminaten zu einer bei bisher bekannten Laminatböden nicht gekannten, völlig neuen, etwa ein Gefühl der Wärme hervorrufenden, holzähnlichen Sensorik bzw. Haptik führt, wenn man sie mit bloßen Füßen betritt.

Polyamide im in die Harzmasse eingearbeiteten Compound bzw. in dessen Wachs-Komponente unterstützen nicht nur die beschriebene neue Sensorik, sie tragen weiters zur erhöhten Widerstandsfähigkeit der Beschichtung, insbesondere auch im Hinblick auf die Vermeidung der Rissbildung bei.

Sowohl die erfindungsgemäß zum ersten Mal erreichbare, bisher mit noch keiner overlayfilm-freien Oberflächen-Beschichtung erreichte Hintanhaltung der Rissbildung als auch die neuartige, direkt an der und in der Nähe der Dekorbahn-Oberfläche, also in der Tiefe der Oberflächen- bzw. Verschleiß-Harzschicht der neuen Laminate, auftretende Konzentrierung der Abrasivstoff-Teilchen dürfte mit dem neuen Compound in der gehärteten Masse des Imprägnier- und Beschichtungsharzes in wesentlichem Zusammenhang stehen, wobei das zusammen mit dem Wachsblend eingesetzte vernetzte (crosslinked) Polyvinylpyrrolidon mit den im Anspruch 3 genannten Charakteristika die wesentliche Rolle spielt. Es wird in das Harz einpolymerisiert und übt infolge der Keto-Enol-Tautomerie der OH-Gruppen eine die Wirkung der bisher eingesetzten Cellulosen mit üblichen Molekulargewichts-Bereichen wesentlich übersteigende, das Harz in Richtung einer Langzeit-Rissbildungsfreiheit modifizierende Wirkung aus.
Was im Hinblick auf die Vermeidung eines "Aufschwimm"-Effektes der Abrasivstoff-Teilchen besonders zu bevorzugende Art von Abrasiv- bzs. Hartstoff-Teilchen betrifft, ist der Einsatz der in Anspruch 4 genannten Korunde besonders bevorzugt.

Eine den schon lange angestrebten und erfindungsgemäß nun erreichten gezielten "Absink-Effekt" der Abrasivstoff-Teilchen in unerwarteter Weise unterstützende Maßnahme besteht überraschenderweise in einer Beigabe von Kügelchen aus Silikatmaterial, insbesondere aus Glas, in die abrasivstoff-hältigen Harzmasse gemäß Anspruch 5 bestehen.

Die Wirkung der Glaskügelchen lässt sich etwa so erklären, dass dieselben sozusagen eine ihrem Durchmesser entsprechende Dicke des Oberflächen- bzw. Verschleiß-Schicht-Harzfilms zwischen einander gewährleisten, was eine wirksame Materialdeckung für die Abrasivstroff-Teilchen bedeutet, welche infolge des Einsatzes des oben beschriebenen Wachs-PVP-Compounds ohnehin die erfindungsgemäß genutzte, an sich unerwartete Tendenz haben, innerhalb der Oberflächen-Schicht zur Dekorbahn hin abzusinken, wodurch das oben erörterte Herausragen von auch nur im Mikronmaßstab liegenden Bereichen der Abrasivstoff-Partikel über das Oberflächen-Niveau der Oberflächen-Schicht verhindert wird.

Um sowohl die Rissfreiheit der fertigen Laminate an der Oberfläche über lange Zeitdauer hinweg zu gewährleisten als auch die Schonung der Pressbleche bzw. -Bänder, bei deren Herstellung der Laminate weiter zu unterstützen, ist das Vorhandensein der im Anspruch 6 genannten inneren, also die Molekularstruktur innerhalb der Harzmasse beeinflussenden, und/oder der äußeren, also der die makroskopisch erfassbaren Eigenschaften derselben beeinflussenden Flexibilisierungsmittel sowie weiters auch der dort genannten Quervernetzungsmittel vorteilhaft.

Insbesondere die in diesem Anspruch erwähnten Zucker können innerhalb der Imprägnier- und Auftrags-Harzmasse eine wichtige Rolle spielen, nämlich dadurch, dass sie je Molekül über 8 freie OH-Gruppen verfügen, die bei der Kondensation des Laminierharzes, wie z.B. Melaminharzes in den entstehenden Molekülverband hochgradig eingebunden werden, und denselben in der Richtung modifizieren, dass eine eventuelle, ohnedies äußerst geringe Rest-Rissbildungsneigung äußerst effektiv unterdrückt wird.

Das im Anspruch 6 weiterhin genannte p-Toluolsulfonsäureamid bildet einen vorteilhaften zusätzlichen Modifikator für den Kondensationsvorgang bei der Melaminharz-Bildung, was auf dessen tautomere Eigenschaften zurückzuführen ist, die dazu führen, dass über einen langen Kondensationszeitraum Kettenabbrüche im Rahmen der Kondensation des Harzes auftreten und so die Bildung großer Molekülketten, welche, wie gefunden wurde, die Rissbildung in wesentlichen Ausmaß verursachen und verstärken, stark vermindert wird.

Im Sinne der bisher gemachten Ausführungen hinsichtlich der Vermeidung von Schäden an den Pressblechen und -bändern der Produktionsstraßen einerseits und der Vermeidung der Rissbildung in den im Gebrauch stehenden neuen Fußbodenpaneele bzw. Laminate für Fußbodenpaneele können die im **Anspruch** 7 genannten Naturstoffe gute zusätzliche Unterstützungsdienste leisten.

Den beiden **Ansprüchen** 8 und 9 sind im Rahmen der für den Erhalt der neuen, tatsächlich dauerhaft rissfrei bleibenden Dekorlaminate eingesetzten Harzmassen günstige Mengenverhältnisse von Wachsblend und vernetztem (crosslinked) Polyvinylpyrrolidon im Compound zu entnehmen.

Einen weiteren wesentlichen Gegenstand der Erfindung betrifft ein neues Verfahren zur Herstellung der neuen, wie eingangs definierten abrasions-resistent ausgerüsteten und rissbildungsfreien Laminate gemäß dem **Oberbegriff** des **Anspruches** 10, welches die im **kennzeichnenden** Teil dieses Anspruches genannten Merkmale bzw. Maßnahmen umfasst.

Schließlich nennt der **Anspruch** 11 im Rahmen der Erfindung vorteilhafterweise einzusetzende Harzmassen, welche wegen ihrer Eigenschaften im Hinblick auf die Verbesserung der Schonung der Pressbleche und -bänder sowie der Rissbildungs-Unterdrückung die dort genannten, besonders bevorzugten Komponenten bzw. Zusätze enthalten.

Zur groben Orientierung wird im Folgenden die Bandbreite der Gehaltsmengen an Haupt- und Nebenkomponenten der im Rahmen der Erfindung bevorzugterweise eingesetzten Dekorbahn-Imprägnier- und -Verschleißschicht-Auftragsharzmassen für Fußbodenplatten genannt:
0,5 bis 1 % Silan(e),
2,0 bis 4 % Xanthan,
15 bis 30 %, insbesondere 20 bis 25 % Abrasiv- bzw.Hartstoffpartikel,
0,5 bis 3 % vernetztes (crosslinked) Polyvinylpyrrolidon(e) (PVP)
0,2 bis 1,5 % Wachsblend; Basis Polyethylen-Polymer (PORO, Pointner und Rothschädl, Salzburg)
3 bis 10 % Zucker (Saccharose)
0,3 bis 1 % p-Toluolsulfonsäureamid
0,1 bis 0,5 % Härter
Rest auf 100 % Melaminharz (-Emulsion bzw. -Lösung)

Durch das Wegfallen des bisher die Rissbildung vermindernden Overlay-Films und vermutlich infolge der durch den neuen Wachsblend - PVP (crosslinked)-Compound in den Harzmassen veränderten bzw. modifizierten Zusammensetzung ergeben sich gravierende positive Änderungen sensorischer Art beim Barfuß-Begehen des neuen Laminates, wenn es für Fußböden bzw. Fußbodenplatten eingesetzt wird: Der sensorische Eindruck der für bisher bekannte Laminatböden an sich typischen "Kälte" der Melaminharz-Oberfläche tritt bei Böden mit den erfindungsgemäßen, den oben beschriebenen Compound in der Harzmasse enthaltenden "Flüssig-Overlays" nicht mehr auf. Der sensorische Eindruck, den der Boden auf den Benutzer macht, kann am besten mit dem Ausdruck "fußwarm" umschrieben werden. Meist wurden bis jetzt auf Laminatböden, deren Paneele bzw. Platten nach der üblichen Technologie hergestellt sind, zumindest im Sitzbereich zusätzlich Teppiche aufgelegt, um die oben erwähnte "Kälte" der bisher bekannten Laminate nicht spürbar werden zu lassen.

Bei Einsatz der erfindungsgemäßen Laminate mit der mit dem Wachsblend-PVP-Compound gebildeten overlay-freien Oberflächen- bzw. Verschleiß-Schicht ist es also zum ersten Mal möglich geworden, fußwarme Laminatböden nach EN 13329 herzustellen. Durch den Wegfall des Overlaypapiers wird eine bisher noch nie erreichte klare Optik des Dekors der neuen, insbesondere für Fußböden vorgesehenen Laminate erreicht. In wesentlicher Weise spielt bei der vorliegenden Erfindung der bisher mit keinem overlayfilm-freien Laminat erreichbare Effekt einer über die Dauer der Lebenszeit des Fußbodens zum ersten Mal tatsächlich erreichten Rißbildungs-Unterdrückung in der Oberflächen- bzw. Verschleiß-Harzschicht eine ganz wesentliche Rolle.

### Beispiel:

Folgende Herstellungsschritte wurden nacheinander durchgeführt, wobei die eingesetzten Ausgangsmaterialien weiter unten im Einzelnen erläutert sind:

Es wurde gemäß folgender Kurz-Arbeitsanweisung gearbeitet, die Erläuterungen zu den hier aufscheinenden Waren- und internen Kurz-Bezeichnungen folgen ebenfalls weiter unten.

Mischer halb gefüllt mit "Rezept 38"-Emulsion, 2,5 L Silane Z-6020 (Silan) zugeben, bei 300 Upm 5 min lang rühren, 10 L "Premix" zugeben, 10 L Xanthan-Lösung zugeben, Drehzahl auf 500 Upm erhöhen, 50 kg "ZWSK 220"-Korund und 50 kg "ZWSK 180"-Korund einmischen, 5 kg vernetztes (crosslinked) Polyvinylpyrrolidon (PVP) zugeben, 1,2 kg Wachsblend, 600 ml Vxt 3797 Hypersal als Netzmittel, 29 kg Kristallzucker, 3 kg Paratoluolsulfonsäureamid und 1,5 L Härter H 806 zumischen. Schließlich auf 420 L mit der "Rezept 38"-Emulsion ergänzen, Drehzahl auf 300 Upm zurückstellen und innerhalb von ca. 5 min fertig mischen. Es wird eine gießfähige Masse erhalten, deren Gelierzeit 3 min 40 s beträgt.

Die Auftragswerte der beschriebenen Harz-Abrasivteilchen-Mischung lagen bei 70 g/m²-Dekorpapier bei ca. 210 - 220 g/m² Endgewicht. Die erhaltene harz-imprägnierte und abrasivteilchen-beaufschlagt oberflächen-beschichtete Dekor-Bahn wurde auf eine Restfeuchte von 6 % bis 6,5 % gebracht. Bei einer Restfeuchte von über 7 % würde eine Verklebung des Harzfilmes drohen.

Die nach einer Teilhärtung erhaltene Dekorbahn wurde direkt auf einer "Hymmen"-Anlage bei 37 m/min Vorschub auf Fußbodenpaneel-Platten aus Feinfaser-Holzwerkstoff aufgebracht und bei 240°C und einem Druck von 20 bar heiß-verpresst.

Es folgen nähere Erläuterungen zu den Komponenten der, wie soeben beschrieben, hergestellten Harz-Imprägnier- und Oberflächen-Auftragsmasse:

### "Premix"-Herstellungsvorschrift:

In 150 L VE-Wasser mit 20°C werden in einem Draismischer 4,5 kg Johannisbrotkernmehl bei 500 Upm eingerührt und nach Abschalten der Kühlung wird die Mischerdrehzahl auf 900 Upm erhöht. Die Lösung wird nach ca. 1,5 h immer viskoser und heizt sich infolge derdurch das Rotor-Stator-Rührwerkzeug generierten Reibungswärme bis zum Kochen auf. Nach ca. 1 h Kochzeit wird die Mischer-Drehzahl auf 300 Upm gesenkt, die Kühlung wird eingeschaltet, es werden 150 L VE-Wasser zugegeben und innerhalb von ca. 2 h wird auf ca. 40°C abgekühlt. Nach Zugabe von 7,5 kg Härter 528 (BASF) und darauf folgendem 10-minütigem Mischen werden dann weitere 120 L VE-Wasser zugegeben und schließlich wird gekühlt, bis 20°C erreicht sind. Die auf diese Weise erhaltene Lösung ist ca. 1 Woche lang verarbeitungsfähig.

Die eingesetzte "Xanthan-Lösung" ist eine 1 %ige Lösung von Xanthan in Wasser, der 0,3 % Formaldehyd zum Stabilisieren der Lösung zugegeben sind.

Die Mischung gemäß "Rezept 38" ist eine Melaminharz-Emulsion mit 250 kg Melaminharz 50 %ig, 4,8 kg verethertem Melaminharz als Modifikator, 0,4 kg Alton MF 179 (Fa. WIZ, Italien) als Netztrennmittel, 0,7 kg Alton 1263 (Fa. WIZ, Italien) als Transparenzverbesserer, 0,3 kg Härter 529 (BASF, Deutschland) und 2,0 kg Härter 806, (KS Deurotex) auf Diethanolamin-Basis.

"Silan Z 6020" (Dow Chemicals, USA) ist ein Aminosilan.

Der als Abrasivstoff eingesetzte "ZWSK-Korund" (Treibacher, Villach, AT) trägt diese Bezeichnung aufgrund der speziellen Art der Herstellung desselben, wobei die beigefügten Nummern 220 und 180 die mittleren Korngrößen in µm bezeichnen

Die Herstellung dieses "Wachsblendes" geht in folgender Weise vor sich: Die dafür vorgesehenen wesentlichen Komponenten, z.B. auf Basis von Polyethylen- bzw. Polyethylenderivat-Thermoplasten, bzw. allgemein gesprochen von Polyalkylen- bzw. Polyalkylenderivat-Thermoplasten werden in Blöcke gegossen, welche nach dem Erkalten zerkleinert und ab einer gewissen Größe in einer Jetmill vermahlen bzw. mikronisiert. Jede der Komponenten wird z.B. durch Sieben, Sichten od. dgl. auf jeweils gewünschte Korngrößen gebracht und es werden jeweils z.B. zwei oder mehrere unterschiedliche Korngrößenfraktionen der verschiedenen Materialien in einem entsprechenden Verhältnis zueinander miteinander vermischt. Siebkennlinien und die Komponenten-Mischungsverhältnisse sind dem Hersteller bekannt.

Das in der Harz-Imprägnier- und -Auftragsmasse eingesetzte "Hypersal VXT 3797" (Solutia, DE).ist ein handelsübliches Netzmittel.

Die hier eingesetzten vernetzten Polyvinylpyrrolidone (PVP), allgemein bezeichnet als "Polyvinylpyrrolidone Cross linked" (BASF, DE) haben die Handelsbezeichnungen "Luvicross" und "Luvicross M" und enthalten bis zu 6,0 % Wasser, 11,0 bis 12,8% Stickstoff, 0,5% Asche sowie unter 50 mg/kg Schwermetalle. Sie werden in Pulverform geliefert. Ihr Molgewicht ist nur größenordnungsmäßig angebbar.

Das im Rahmen der Erfindung und des Beispiels einsetzbare p-Toluolsulfonsäureamid ist als Kettenabbrecher bekannt und kann, wie gefunden wurde, in gewissem Ausmaß zur Vermeidung der oben beschriebenen, unerwünschten Rissbildung in der overlayfilm-freien Laminat-Oberflächen-Schicht beitragen.

Die bisher nicht voll beherrschbare, schon mehrmals angesprochene Rissbildungstendenz lässt sich durch den als bevorzugterweise einsetzbare weitere Komponente in der Harz-Auftragsmasse vorgesehenen handelsüblichen Zucker (Saccharose) (auch andere Di- und Oligosaccharide sind einsetzbar) besonders wirkungsvoll weiter zurückdrängen.

Die auf Basis der obigen Angaben produzierten neuen Fußboden-Laminate zeichnen sich durch hochabriebfeste Oberflächenfilme aus. Sie sind innerhalb der üblichen Laminat-Presszeiten und bei den sonst bei der Laminatherstellung üblichen Bedingungen ohne weiteres produzierbar.

Mit einem tiefstrukturierten Dekorblech hitze-verpresste Fußbodenpaneele auf Basis des vorherigen Beispiels zeigen hervorragende Qualität, die Geschlossenheit des Oberflächen- bzw. Überzugs-Harzfilms ist ausgezeichnet. Es treten beim "Dampftest" keine Blasen auf und es kommt auch zu keiner Vergrauung. Bei Aushärtung im Trockenschrank bei 70 und 100°C treten selbst nach 24 h keinerlei Risse auf, was auch bei einer noch höheren Temperatur, nämlich bei 120°C, ebenfalls nach 24 h, der Fall ist.

Beim Testen der Laminat-Oberfläche durch Anfärbung derselben mit Graphit ist kein die Außen-Oberfläche der Harz-Beschichtung durchdringendes Abrasivmittelkorn nachweisbar. Der Abrasertest erbrachte hervorragende Werte der Abriebfestigkeit bis zur höchsten Abriebklasse, AC5 nach EN 13 329.

Besonders hervorzuheben ist nicht zuletzt die völlig unerwartete, im Vergleich zu bisher bekannten Laminat-Fußböden auffallend angenehme Haptik bzw. Sensorik der erfindungsgemäßen Produkte, nämlich eine neue Art der Vermittlung einer Wärme-Empfindung bei Betreten des mit unter Einsatz der neuen Harz-Imprägnier- und -Auftragsmasse erzeugten Paneelen erstellten Fußbodens mit bloßen Füßen, welche durchaus etwa mit dem Empfinden bei Betreten eines gewachsten Naturholz-Parkettbodens vergleichbar ist.

## Patentansprüche

1. Dekorlaminat mit abriebfester Oberflächen-Beschichtung für damit beschichtete bzw. zu beschichtende Laminatkörper, Laminat-Fußbodenplatten oder -paneele auf Basis von Holzwerkstoffen, wobei das Laminat mit zumindest einer Lage einer mit einem (teil-)hitzegehärteten Kunstharz imprägnierten, mit einem entsprechenden Dekor versehenen, äußeren, sicht- und benutzungsseitigen Faserstoff- und/oder Papierbahn (Dekorbahn) gebildet ist, welche mit einer abrasions-resistent ausgerüsteten, hitzegehärteten oder teil-hitzegehärteten Masse auf Basis mindestens eines hitzehärtbaren Kunstharzes aus der Gruppe Melaminharze, Formaldehydharze und Harnstoffharze, sowie weiters eines Wachses auf Basis eines thermoplastischen Polymers, welcher Masse mindestens ein weiteres Additiv und/oder ein weiterer Hilfsstoff zugesetzt sind, imprägniert und beschichtet ist, wobei in der die Oberflächen- bzw. Verschleiß-Schicht auf der Dekorbahn bildenden hitzegehärteten bzw. teilhitzegehärteten Kunstharzmasse der Dekorbahn Partikel mindestens eines abrasions-resistenten Hartstoffes aus der Gruppe α-Aluminiumoxid bzw. α-Korund und/oder Wolframcarbid verteilt sind,
**dadurch gekennzeichnet,**
- **dass** die die Harzimprägnierung des Körpers der Dekorbahn bildende und die mit derselben material-integrale bzw. einstückige, im Ein-Schrittverfahren aufgebrachte, eine - hoch-abriebfeste Oberflächen-Harzschicht mit einer geschlossenen bzw. glatten Außen-Oberfläche, bildende - hitzegehärtete bzw. teil-hitzegehärtete Harzmasse mit mindestens einem der oben genannten, hitzehärtbaren Kunstharze und mit den an sich bekannten und für Laminat-Imprägnierungen und -Beschichtungen üblichen Zusatz- und/oder Hilfsstoffen gebildet ist,
- wobei die Kunstharzmasse als wesentlichen Bestandteil eine in die Harzmasse integrierte Mischung bzw. einen derartigen Compound von mindestens einem Wachs-Blend auf Basis eines mikronisierten Polyethylen-, Polypropylen- und/oder Polyamid-Polymeren bzw. -Copolymeren mit mindestens einem vernetzten (crosslinked) Polyvinylpyrrolidon enthält,
- **dass** die Partikel des abrasions-resistenten Hartstoffes in der Oberflächen-Schicht, im wesentlichen nur direkt auf der bzw. direkt angrenzend an die sichtseitige Fläche bzw. Oberfläche der Dekorbahn im unmittelbaren Nahbereich derselben angeordnet und dort konzentriert sind,
- wobei die Verteilungs- bzw. Belegungsdichte der sich in der Oberflächen-Schicht des Dekorlaminats befindlichen Abrasivstoff-Partikel in derselben - ausgehend von einem Wert, von zwischen 80 % und 95 %, unmittelbar auf der Dekorbahn bzw. auf deren sichtseitiger Fläche bzw. Oberfläche und im unmittelbaren Nahbereich derselben - bis zur Außen-Oberfläche der Oberflächen-Schicht hin, innerhalb eines Dicken-Bereiches der Oberflächen-Harzschicht von 0,05 bis 0,15 mm, einem steilen negativen Gradienten folgend, im Wesentlichen auf einen Wert von Null Prozent (0%) absinkt.

2. Dekorlaminat nach Anspruch 1, **dadurch gekennzeichnet, dass** der Wachs-Blend im Compound in der zumindest teilweise gehärteten Harzmasse ein Wachs-Blend auf Basis mikronisierter Thermoplast-Polymere auf Basis von Ethylen und Polyamid ist.

3. Dekorlaminat nach Anspruch 1 oder 2, **dadurch gekennzeichnet, dass** das Polyvinylpyrrolidon des in der zumindest teilweise gehärteten Harzmasse enthaltenen Compounds ein Molekulargewicht im Bereich von 25.000 bis 750.000, vorzugsweise von 100.000 bis 500.000, aufweist.

4. Dekorlaminat nach einem der Ansprüche 1 bis 3, **dadurch gekennzeichnet, dass** die in der Oberflächen-Schicht desselben enthaltenen Aluminiumoxid- bzw. Korund-Partikel zu wesentlichen Anteilen, insbesondere zu mindestens 40 %, vorzugsweise zu mindestens 80 %, Tablarform aufweisen und deren mittlere Korngröße im Bereich von 10 bis 100 µm, insbesondere von 10 bis 50 µm, beträgt.

5. Dekorlaminat nach einem der Ansprüche 1 bis 4, **dadurch gekennzeichnet, dass** in der Oberflächen-Schicht desselben neben den abrieb-resistenten Hartstoffpartikeln sphäroide Silikat-, vorzugsweise Glaskügelchen, mit Durchmessern im Bereich von 30 bis 100 µm vorhanden sind.

6. Dekorlaminat nach einem der Ansprüche 1 bis 5, **dadurch gekennzeichnet, dass** in der - die Imprägnierung der Dekorbahn und deren Oberflächen-Schicht bildenden - zumindest teilweise gehärteten Harzmasse Harz-Modifikatoren, wie äußere Flexibilisierungsmittel, vorzugsweise Zucker, und/oder Glykole, wie Diethylenglycol, und/oder innere Flexibilisierungsmittel, wie ε-Caprolactam und/oder p-Toluolsulfonsäureamid, und/oder Quervernetzungsregulatoren, vorzugsweise Dicyandiamid, Acetoguanamin und/oder Benzoguanamin, enthalten sind.

7. Dekorlaminat nach einem der Ansprüche 1 bis 6, **dadurch gekennzeichnet, dass** in der - die Imprägnierung der Dekorbahn und deren Oberflächen-Schicht bildenden - (teil-)gehärteten Harzmasse zusätzlich mindestens ein Naturstoff bzw. naturidenter Stoff aus der Gruppe Guarkern-Mehl, Mehl(e) von Topinambur, Zichorie und/oder Dahlie, Johannisbrotkern-Mehl, Cesa-gum, Guargum, Gummi arabicum, Carrageen, Traganth, Agar Agar und/oder Xanthan, bevorzugt jedoch Johannisbrotkern-Mehl und/oder Xanthan, enthalten ist bzw. sind.

8. Dekorlaminat nach einem der Ansprüche 1 bis 7, **dadurch gekennzeichnet, dass** der im Mengenanteil des Wachs-Blends in dem in der zumindest teilweise gehärteten Harzmasse enthaltenen Compound - jeweils bezogen auf die gesamte zumindest teilweise gehärtete Harzmasse ohne abrasions-resistente Hartstoff-Partikel - 0,5 bis 2,5 % beträgt.

9. Dekorlaminat nach einem der Ansprüche 2 bis 8, **dadurch gekennzeichnet, dass** der Mengenanteil von vernetztem Polyvinylpyrrolidon des in der zumindest teilweise gehärteten Harzmasse enthaltenen Compounds - jeweils bezogen auf die gesamte zumindest teilweise gehärtete Harzmasse, jedoch ohne die abrasions-resistenten Hartstoff-Partikel - 1,5 bis 12 %, bevorzugt 3 bis 8 %, beträgt.

10. Verfahren zur Herstellung von Dekorlaminaten mit abriebfester Oberflächen- bzw. Verschleiß-Schicht für damit beschichtete Laminatkörper, insbesondere Fußbodenplatten bzw. -paneele auf Basis von Holzwerkstoffen, wobei das Laminat mit zumindest einer Lage einer mit einem (teil-)hitzegehärteten Kunstharz imprägnierten, mit einem entsprechenden Dekor versehenen, äußeren, sicht- und benutzungsseitigen Faserstoff- und/oder Papierbahn (Dekorbahn) gebildet ist, welche mit einer abrasions-resistent ausgerüsteten, hitzegehärteten Masse auf Basis mindestens eines hitzehärtbaren Kunstharzes, dem mindestens ein Wachs auf Basis eines thermoplastischen Polymers und weiters mindestens ein Additiv und/oder Hilfsstoff zugesetzt ist, imprägniert und oberflächenbeschichtet wird, wobei in der die Oberflächen-Schicht der Dekorbahn bildenden (teil-)hitzegehärteten Kunstharzmasse der Dekorbahn Partikel mindestens eines abrasions-resistenten Hartstoffes aus der Gruppe α-Aluminiumoxid bzw. α-Korund und/oder Wolframcarbid verteilt sind, nach einem der Ansprüche 1 bis 9, wobei eine mit einem jeweils vorgesehenen Dekor bedruckte Faserstoff- bzw. Papierbahn in einem Einschritt-Arbeitsgang mit einer die üblichen Komponenten sowie weiters Zusatz- und/oder Hilfsstoffe und abrasions-resistente Hartstoff-Partikel enthaltenden Masse eines, hitzehärtbaren Harzes imprägniert und unter gleichzeitiger Ausbildung einer mit der Harzimprägnierung der Dekorbahn materialintegralen bzw. einstückigen eine geschlossene bzw. glatte Außen-Oberfläche ausbildenden Oberflächen- bzw. Verschleiß-Harzschicht beschichtet wird,
- **dadurch gekennzeichnet, dass** innerhalb derselben
- die Partikel des abrasions-resistenten Hartstoffes, im wesentlichen direkt zu der und in den unmittelbaren Nahbereich der Dekorbahn-Oberfläche absinken und sich dort in hoher Konzentration ansammeln gelassen werden,
- wobei die Verteilungsdichte der sich in dieser Oberflächen-Schicht befindlichen Abrasivstoff-Partikel ausgehend von einem Wert von zwischen 80 und 95% unmittelbar auf bzw. an der Oberfläche der Dekorbahn und im unmittelbaren Nahbereich derselben bis zur Außen-Oberfläche hin - einem steilen negativen Gradienten folgend - im Wesentlichen auf einen Wert von Null Prozent (0%) absinkt,
- wobei für die Imprägnierung und Beschichtung der Faserstoff- bzw. Papierbahn eine Harzmasse eingesetzt wird, welche als wesentlichen Bestandteil eine in dieselbe integrierte Mischung bzw. einen derartigen Compound von einem Wachsblend auf Basis eines mikronisierten Polyethylen-, Polypropylen- und/oder Polyamid-Polymers- oder -Copolymers und mit mindestens einem vernetzten Polyvinylpyrrolidon enthält, und
- dass nach der Imprägnierung und der simultan mit derselben erfolgenden Oberflächen-Beschichtung der Dekorbahn die übliche zumindest teilweise Aushärtung der Dekorbahn oder - nach entsprechendem Feuchtigkeitsentzug - mit oder ohne Zwischenschaltung einer - unterhalb der Dekorbahn anzuordnenden - Trägerbahn, eine direkte Aufbringung der mit der beschriebenen Harzmasse imprägnierten und beschichteten Dekorbahn auf ein Holzwerkstoff-Substrat in Platten- oder Paneelform, vorzugsweise auf Fußboden-Platten oder -Paneele, erfolgt.

11. Verfahren nach Anspruch 10, **dadurch gekennzeichnet, dass** eine Harzmasse mit einem Gehalt an den wie in zumindest einem der Ansprüche 1 bis 9 genannten Komponenten in - jeweils den dort für die letztlich gehärteten bzw. teil-gehärteten Harzmassen genannten - Mengenanteilen entsprechenden Mengen eingesetzt wird.

## Claims

1. A decorative laminate having an abrasion-resistant surface coating for laminate bodies, laminate floor plates or panels on the basis of wood materials, which are coated or to be coated therewith, said laminate being formed with at least one outer layer of a fibre or paper web (decorative layer), impregnated with a (partially) heat-cured synthetic resin and provided with a respective decoration, on the user-visible side, said decorative layer being impregnated and coated with an abrasion-resistant-modified, heat-cured or partially heat-cured mass on the basis of at least one heat-curable synthetic resin, selected from the group consisting of melamine, formaldehyde and urea resins, and of a wax on the basis of a thermoplastic polymer, which mass is added with at least one further additive and/or one further adjuvant, wherein particles of at least one abrasion-resistant hard material selected from the group consisting of alpha-alumina and alpha-corundum and/or tungsten carbide are distributed in the heat cured or partially heat-cured synthetic resin mass forming the surface or wearing layer on the decorative layer, **characterised**
- **in that** the heat-cured or partially heat-cured resin mass forming the resin impregnation of the body of the decorative layer and applied integrated with said web in a one-step process and forming a highly abrasion-resistant surface resin layer with a closed or smooth outer surface is formed with at least one of the above-mentioned heat-curable synthetic resins and the additives and/or adjuvants which are commonly used for impregnating and coating laminates and are known *per se,*
- **in that** the synthetic resin mass contains a mixture integrated into the resin mass or a compound of at least one wax blend on the basis of micronised polyethylene, polypropylene and/or polyamide polymers and at least one crosslinked polyvinyl pyrrolidone as an essential component,
- **in that** the particles of said abrasion-resistant hard material are localised and concentrated in the surface layer essentially directly on or directly adjacent to the visible surface of the decorative layer in immediate proximity to said decorative layer,
- the distribution or coverage density of the abrasion-resistant particles in the surface layer of the decorative laminate drops according to a steep negative gradient from between 80% and 95% directly on the decorative layer or on its visible surface and in immediate proximity of said visible surface to essentially 0% on the external surface of the surface layer within a thickness section of the surface resin layer from 0.05 to 0.15 mm.

2. The decorative laminate according to claim 1, **characterised in that** the wax blend in the compound in the at least partially cured resin mass is a wax blend on the basis of micronised thermoplastic ethylene- and polyamide-based polymers.

3. The decorative laminate according to claim 1 or 2, **characterised in that** said polyvinyl pyrrolidone of the compound contained in the at least partially cured resin mass has a molecular weight ranging from 25,000 to 750,000, preferably from 100,000 to 500,000.

4. The decorative laminate according to any one of the claims 1 to 3, **characterised in that** an essential portion, particularly at least 40%, preferably at least 80%, of the alumina or conrundum particles contained in the surface layer of said decorative laminate are tabular and have an average grain size ranging from 10 to 100 µm, particularly from 10 to 50 µm.

5. The decorative laminate according to any one of the claims 1 to 4, **characterised in that** the surface layer of said decorative laminate contains spheroid silicate beads, preferably glass beads having diameters ranging from 30 to 100 µm in addition to the abrasion-resistant hard material particles.

6. The decorative laminate according to any one of the claims 1 to 5, **characterised in that** the at least partially cured resin mass for impregnating the decorative layer and forming its surface layer contains resin modifiers, such as external flexibilisation agents, preferably sugar, and/or glycols, such as diethylene glycol, and/or internal flexibilisation agents, such as ε-caprolactam and/or p-toluene sulfonic acid amide, and/or crosslinking regulators, preferably dicyandiamide, acetoguanamine and/or benzoguanamine.

7. The decorative laminate according to any one of the claims 1 to 6, **characterised in that** the at least partially cured resin mass for impregnating the decorative layer and forming its surface layer additionally contains at least one natural or nature-identical substance selected from the group consisting of guar gum, topinambour, chicory and/or dahlia gum(s), carob gum, cesa gum, guar gum, gum Arabic, carrageen, gum tragacanth, agar agar and/or xanthan gum, preferably carob gum and/or xanthan gum.

8. The decorative laminate according to any one of the claims 1 to 7, **characterised in that** the amount of wax blend contained in the compound contained in the at least partially cured resin mass is 0.5% to 2.5%, based on the overall at least partially cured resin mass without said abrasion-resistant hard material particles.

9. The decorative laminate according to any one of the claims 1 to 7, **characterised in that** the amount of cured polyvinyl pyrrolidone contained in the compound contained in the at least partially cured resin mass is 1.5% to 12%, preferably 3% to 8%, based on the overall at least partially cured resin mass without said abrasion-resistant hard material particles.

10. A process for manufacturing decorative laminates having an abrasion-resistant surface coating for laminate bodies, laminate floor plates or panels on the basis of wood materials coated or to be coated with said laminate, wherein said laminate is formed with at least one outer layer of a fibre or paper web (decorative layer), being impregnated with a (partially) heat-cured synthetic resin and provided with a respective decoration, on the user-visible side, said decorative layer is impregnated and surface-coated with an abrasion-resistant-modified, heat-cured mass on the basis of at least one heat-curable synthetic resin which is added with at least one wax on the basis of a thermoplastic polymer and, additionally, at least one additive and/or adjuvant, wherein particles of at least one abrasion-resistant hard material selected from the group consisting of alpha-alumina and alpha-corundum and/or tungsten carbide are distributed in the (partially) heat cured synthetic resin mass forming the surface layer of the decorative layer, according to any one of the claims 1 to 9, wherein a fibre or paper web, onto which a respective decoration is printed, is coated with a heat-curable resin mass containing common components and further additives and/or adjuvants and abrasion-resistant hard material particles in a one-step process, simultaneously forming a surface or wearing resin layer integrated with the resin impregnation of the decorative layer and forming a closed or smooth outer surface with said decorative layer,
**characterised in that** within said surface or wearing layer
- said abrasion-resistant hard material particles sink essentially directly down into the immediate proximity of the surface of the decorative layer and accumulate there at a high concentration,
- the distribution density of the abrasion-resistant particles in the surface layer decreases according to a steep negative gradient from between 80% and 95% directly on the surface of the decorative layer and in its immediate proximity to essentially 0% on the outer surface of the surface layer,
- a resin mass is used for impregnation and coating the fibre or paper web, said resin mass containing as an essential component an integrated mixture or a compound of a wax blend on the basis of a micronised polyethylene, polypropylene and/or polyamide polymer or copolymer and at least one crosslinked polyvinyl pyrrolidone, and
- the impregnation and the simultaneous surface coating of the decorative layer are followed by the usual, at least partial curing of the decorative layer or, after adequate elimination of humidity, with or without interpositioning a supporting web to be arranged under the decorative layer, the direct application of the decorative layer impregnated and coated with the above-described resin mass onto a wood substrate in the form of a plate or panel, preferably onto floor plates or panels.

11. The process according to claim 10, **characterised in that** a resin mass containing the components mentioned in at least one of the claims 1 to 9 at amounts corresponding to the amounts respectively stated there for cured and partially cured resin masses.

## Revendications

1. Laminé décoratif comportant un revêtement de surface pour corps laminés, panneaux de plancher laminés ou panneaux à base de matériaux en bois, laminés ou à laminer avec ledit laminé, ledit laminé étant formé avec au moins une couche extérieure fibreuse ou d'une bande de papier (couche décorative) comportant une décoration imprégnée avec une résine synthétique (partiellement) durcie par traitement thermique et disposée sur la face visible à l'utilisateur, la couche décorative étant imprégnée et revêtue d'une masse résistante à l'abrasion, durcie par traitement thermique ou partiellement durcie par traitement thermique, à base d'au moins une résine synthétique pouvant être durcie par traitement thermique, sélectionnée du groupe composé de résines de mélamine, résines de formaldéhyde et résines d'urée, ainsi que d'une résine à base d'un polymère thermoplastique, au moins un autre additif et/ou un autre adjuvant étant ajouté à ladite masse, des particules d'au moins un matériau dur résistant à l'abrasion sélectionnée du groupe composé d'alumine-alpha et corindon-alpha et/ou carbure de tungstène étant distribués dans la masse de résine durcie par traitement thermique ou partiellement durcie par traitement thermique formant la surface ou la couche d'usure de la bande décorative,
**caractérisé en ce que**
- la masse de résine, durcie par traitement thermique ou partiellement durcie par traitement thermique, formant l'imprégnation de résine du corps de la bande décorative et appliquée de façon intégrale avec ladite bande dans un procédé unique et formant une couche de résine de surface fortement résistante à l'abrasion avec une surface fermée et/ou lisse, est formée avec au moins une des résines synthétiques pouvant être durcies par traitement thermique et avec les additifs et/ou adjuvants utilisés normalement pour imprégner et revêtir des laminés,
- la masse de résine synthétique contient comme composant essentiel une mixture intégrée dans la masse de résine ou un composé d'au moins un mélange de cire à base de polymères micronisés de polyéthylène, polypropylène et/ou polyamide et au moins une polyvinylpyrrolidone,
- les particules du matériau dur résistant à l'abrasion étant localisés et concentrés dans la couche de surface essentiellement directement sur ou directement adjacente à la surface visible de la bande décorative en proximité immédiate avec la bande de décoration,
- la densité de distribution et d'accumulation des particules résistant à l'abrasion dans la couche de surface du laminé décoratif diminue selon un gradient négatif abrupt d'entre 80 et 95 % directement sur la bande décorative ou sur sa face ou surface visible à essentiellement 0 % sur la face extérieure de la couche de surface dans une région d'épaisseur de la couche de résine de surface correspondant à 0,05 à 0,15 mm.

2. Laminé décoratif selon la revendication 1, **caractérisé en ce que** le mélange de cire dans le composé dans la masse de résine au moins partiellement durcie est un mélange à base de polymères thermoplastiques micronisés à base d'éthylène et de polyamide.

3. Laminé décoratif selon les revendications 1 ou 2, **caractérisé en ce que** la polyvinylpyrrolidone du composé compris dans la masse de résine au moins partiellement durcie présente un poids moléculaire d'entre 25 000 et 750 000, de préférence d'entre 100 00 à 500 000.

4. Laminé décoratif selon une des revendications 1 à 3, **caractérisé en ce qu'**une portion essentielle, en particulier au moins 40 %, de préférence au moins 80 %, des particules d'alumine ou de corindon compris dans la couche de surface du laminé décoratif présentent une forme tabellaire et une granulométrie moyenne d'entre 10 et 100 µm, en particulier d'entre 10 et 50 µm.

5. Laminé décoratif selon une des revendications 1 à 4, **caractérisé en ce que** la couche de surface du laminé décoratif comprend, à part les particules de matériau dur résistant à l'abrasion, des granules sphéroïdes de silicate, de préférence de verre, avec des diamètres d'entre 30 à 100 µm.

6. Laminé décoratif selon une des revendications 1 à 5, **caractérisé en ce que** la masse de résine au moins partiellement durcie pour imprégner la bande décorative et former sa couche de surface comprend des modificateurs de résine, comme des agents de flexibilisation extérieurs, de préférence du sucre et/ou des glycols, comme du diéthylèneglycol, et/ou des agents de flexibilisation intérieurs, comme du caprolactame-ε et/ou de l'amide d'acide p-toluènesulfonique, et/ou des régulateurs de réticulation, de préférence du dicyandiamide, de l'acétoguanamine et/ou de la benzoguanamine.

7. Laminé décoratif selon une des revendications 1 à 6, **caractérisé en ce que** la masse de résine au moins partiellement durcie pour imprégner la bande décorative et former sa couche de surface, comprend également au moins une substance naturelle ou analogue à une substance naturelle sélectionnée du groupe composé de gomme de guar, gomme(s) de topinambour, de chicorée et/ou de dahlia, gomme de caroube, Cesagum, Guargum, gomme arabique, carraghénane, tragacanthe, agar agar et/ou xanthane, de préférence de la gomme de caroube et de la gomme xanthane.

8. Laminé décoratif selon une des revendications 1 à 7, **caractérisé en ce que** la quantité de mélange de cire contenue dans le composé dans la masse de résine au moins partiellement durcie correspond à 0,5 à 2,5 % en relation avec la totalité de la masse de résine au moins partiellement durcie, sans les particules de matériau dur résistant à l'abrasion.

9. Laminé décoratif selon une des revendications 1 à 7, **caractérisé en ce que** la quantité de polyvinylpyrrolidone contenue dans le composé dans la masse de résine au moins partiellement durcie correspond à 1,5 à 12 %, de préférence 3 à 8 %, en relation avec la totalité de la masse de résine au moins partiellement durcie, sans les particules de matériau dur résistant à l'abrasion.

10. Procédé pour la production de laminés décoratifs comportant un revêtement de surface pour corps laminés, panneaux de plancher laminés ou panneaux à base de matériaux en bois, laminés ou à laminer avec ledit laminé, ledit laminé étant formé avec au moins une couche extérieure fibreuse ou d'une bande de papier (couche décorative) comportant une décoration imprégnée avec une résine synthétique (partiellement) durcie par traitement thermique et disposée sur la face visible à l'utilisateur, la couche décorative étant imprégnée et revêtue avec une masse résistante à l'abrasion, durcie par traitement thermique ou partiellement durcie par traitement thermique, à base d'au moins une résine synthétique pouvant être durcie par traitement thermique, sélectionnée du groupe composé de résines de mélamine, résines de formaldéhyde et résines urées, ainsi que d'une résine à base d'un polymère thermoplastique, au moins un autre additif et/ou un autre adjuvant étant ajouté à ladite masse, des particules d'au moins un matériau dur résistant à l'abrasion sélectionnée du groupe composé d'alumine-alpha et corindon-alpha et/ou carbure de tungstène étant distribués dans la masse de résine durcie par traitement thermique ou partiellement durcie par traitement thermique formant la surface de la bande décorative, selon une des revendications 1 à 9, une bande fibreuse ou de papier, sur laquelle est imprimée respectivement une décoration prévue, étant imprégnée et revêtue d'une masse résistante à l'abrasion composée de composants courants et d'ultérieurs additifs et/ou adjuvants et particules de matériau dur résistant à l'abrasion dans un procédé à une seule étape, et simultanément formant une surface ou une couche d'usure de résine intégrée avec l'imprégnation de résine de la bande décorative et formant une face fermée et lisse avec la bande décorative, **caractérisé en ce que** dans la surface ou couche d'usure
- les particules de matériau dur résistant à l'abrasion se déposent directement en proximité immédiate de la surface de la bande décorative et s'y accumulent à haute concentration,
- la densité de distribution des particules résistant à l'abrasion diminue selon un gradient négatif abrupt d'entre 80 et 95 % directement sur la bande décorative ou sur sa face visible ou surface à essentiellement 0 % sur la face extérieure de la couche de surface,
- une masse de résine étant utilisée pour imprégner et revêtir la bande fibreuse ou en papier, ladite masse de résine étant composée essentiellement d'une mixture ou d'un composé intégré(e) d'un mélange de cire à base d'un polymère ou copolymère micronisé de polyéthylène, polypropylène et/ou polyamide et au moins une polyvinylpyrrolidone réticulée, et **en ce que**
- l'imprégnation et le revêtement de surface simultané de la bande décorative sont suivis par le durcissement au moins partiel courant de la bande décorative ou, après élimination adéquate de l'humidité, en disposant ou sans disposer une bande de support à être arrangée sous la bande décorative, par l'application directe de la bande décorative imprégnée et revêtue de la masse de résine décrite sur un substrat en bois sous forme d'une plaque ou d'un panneau, de préférence sur des plaques ou panneaux de plancher.

11. Procédé selon la revendication 10, **caractérisé en ce qu'**une masse de résine comportant les composants mentionnés dans au moins une des revendications 1 à 9 selon des proportions correspondant à celles mentionnées pour les masses de résine finalement durcies ou partiellement durcies est utilisée.
